# EUROPEAN PATENT SPECIFICATION

(11) **EP 2 927 128 B1**
(45) Date of publication and mention of the grant of the patent: **22.05.2019**
(21) Application number: 15162108.3
(22) Date of filing: 31.03.2015
(51) Int. Cl.: B64D 11/06

(54) **VEHICLE SEAT WITH LOCKING APPARATUS**
FAHRZEUGSITZ MIT ARRETIERVORRICHTUNG
SIÈGE DE VÉHICULE AVEC DISPOSITIF DE VERROUILLAGE

(30) Priority: 03.04.2014 GB 201406009
(43) Date of publication of application: 07.10.2015
(73) Proprietor: Thompson Aero Seating Limited, Portadown, Armagh BT63 5QE (GB)
(72) Inventor: Mulholland, Séamas, Lurgan, County Armagh BT56 6LG (GB); Thompson, James, Kilkeel, County Down BT34 4SR (GB)
(74) Representative: FRKelly

(56) References cited:
- WO-A1-2012/095534
- DE-A1-102009 059 126
- US-B1- 7 748 778

## Description

### Field of the Invention

The present invention relates to vehicle seats, especially aircraft seats.

### Background of the Invention

Vehicle seats often include a mechanism that allows them to move back and forth, for example to adjust leg room or to facilitate reclining the seat. In the event of sudden acceleration or deceleration of the vehicle, the forces acting on the seat, with or without a passenger, can cause unwanted and dangerous movement of the seat via the mechanism.

In a typical reclinable aircraft seat, the recline mechanism, which enables the movement of the seat between upright and recline position, optionally bed position, comprises a movable upper carriage coupled to a fixed lower structure that is connected to the aircraft floor structure. At any position within its full range of movement, the upper carriage may be stopped by the passenger, and must be securely retained against inadvertent movement. In the case of a manually operated recline mechanism, this may be achieved by means of a system of spring-loaded teeth and slots similar to a manual car seat adjuster. If the recline mechanism is to be operated using a motor and reduction gear system, the force required to back drive the unpowered motor is normally sufficient to prevent movement of the carriage. Except for TTL (taxi, take-off or landing), the loads that might cause the carriage to move are in the order of 1.5G - 2G in a forward or aft direction. For TTL, the loads that must be sustained are 9G (static) or 16G (dynamic) in the forward direction and 1.5G in the aft direction.

Vehicle seats may also comprise an apparatus for locking the vehicle seat, and for locking the seat's movable recline carriage, to prevent the unwanted and dangerous movement of the seat, such as in the event of sudden acceleration or deceleration of the vehicle. However, such apparatuses can be prone to inappropriate locking or jamming during the normal use of the seat, for example, due to foreign objects getting lodged in the recline mechanism. Consequently, the further normal use of the seat is prevented. WO2012/095534 discloses a known adjustable vehicle seat.

It is desirable therefore to provide an apparatus for locking a vehicle seat with respect to its slide mechanism, and in particular for locking a seat's movable recline carriage with respect to a fixed lower structure, which mitigates the problems outlined above.

### Summary of the Invention

Accordingly, the invention provides a vehicle seat having a carriage that is linearly movable with respect to a base, and a locking apparatus comprising first and second components, each having a respective set of teeth that inter-engage such that, during movement of the carriage with respect to the base, one of said first and second toothed components imparts movement to the other via the respective teeth, the locking apparatus further comprising a locking member having a set of teeth formed thereon for selectively inter-engaging the teeth of the first and second components, the locking member being movable between a non-locking state, wherein the teeth of the locking member do not engage the teeth of either of said first and second components, an intermediate state, wherein the teeth of the locking member engage the teeth of the first component, and a locking state, wherein the teeth of the locking member engage with the teeth of both of said first and second components to prevent relative movement between the first and second components, the locking member being moved between its intermediate and locking states by virtue of movement of the first component with respect to the second component, wherein said carriage is linearly movable with respect to said base along a first axis corresponding to a fore-and-aft direction of a seated passenger, said locking member being responsive to a force in a first direction along said first axis above a threshold level to move from its non-locking state into its intermediate state, subsequent displacement of said carriage with respect to the base due to said force causing movement of the locking member from its intermediate state to its locking state, wherein in the intermediate state the teeth of the locking member engage only the teeth of the first component. The force may be created in use by deceleration of said vehicle seat and/or the force may be created in use by acceleration of said vehicle seat.

Preferably the locking apparatus is configured such that said locking member adopts its non-locking state under the influence of gravity.

The locking member may be pivotably movable between its non-locking and intermediate states.

The first component may comprise a rotatable gear, or a toothed rack or other toothed component and/or the second component may comprise a rotatable driven gear. Alternatively, the first component may comprise a rotatable driven gear, and/or the second component may comprise a rotatable gear, or a toothed rack or other toothed component.

In typical embodiments, the vehicle seat is an aircraft seat.

One of said first and second toothed components may be provided on the carriage, the other on the base. Alternatively, both first and second toothed components may be provided on the base.

Said locking member may be a partially toothed gear or a segment of a gear. Optionally, said locking member is a partially toothed gear having a plurality of teeth around one or more portions of the circumferential edge of the locking member, wherein, in the locking state, said teeth are positioned and orientated to be selectively engageable with the teeth of the first and second components.

In typical embodiments, said carriage and said base are coupled together by a rack and pinion gear. Said rack may serve as said first toothed component, while said pinion gear may serve as said second toothed component. Alternatively, said rack and/or pinion gear may serve as said first toothed component, and said second toothed component may comprise a further first gear interengageable with both said pinion gear and said locking member.

The rack may be provided on said carriage and the corresponding pinion gear may be provided on said base, in which case the pinion gear is rotatable about an axis that is fixed with respect to the base. Alternatively, the rack may be provided on said base and the corresponding pinion gear may be provided on said carriage, in which case the pinion gear is rotatable about an axis that is fixed with respect to the carriage.

In preferred embodiments, the locking member of the locking apparatus is engageable with the pinion gear when the locking member is in its intermediate position, such that the locking member and pinion gear rotate, in use, in opposite senses, causing the locking member to be moved between its intermediate state, in which said locking member is disengaged from the pinion gear the first gear, and its locking state, in which said locking member inter-engages with both the pinion gear and the first gear, to prevent rotation of the pinion and first gears. In embodiments where the rack is provided on the carriage, said first gear is rotatable about an axis that is fixed with respect to the base, and in embodiments where the rack is provided on the base, said first gear is rotatable about an axis that is fixed with respect to the carriage

The locking apparatus is particularly intended for stopping relative movement of the carriage and base in the event of deceleration of the vehicle (such as in its forward direction of movement) at a level above a threshold value. Hence, said locking member is movable to its intermediate state from its non-locking state in response to force being exerted on said locking apparatus in a forward direction. More particularly, said locking member is movable to its intermediate state in response to force above a threshold level being exerted on said locking apparatus in said forward direction.
Said forward direction corresponds with the forward direction of movement of the vehicle when said seat faces in said forward direction and so said forward force may be caused by deceleration of the vehicle.

In the preferred embodiment, said first gear inter-engages with said pinion gear. Further preferably, said locking member inter-engages with said pinion gear when in its intermediate state and with both the pinion gear and the first gear when in its locking state. Alternatively said first gear may also serve as said pinion gear, in which case said locking member is movable to engage with said rack, and the first gear in its locking state.

Preferably, the locking apparatus further comprises a supporting arm, the locking member being rotatably coupled to the supporting arm, for movement between its intermediate and locking states, and the supporting arm being pivotable to allow the locking member to pivot between its non-locking and intermediate states. In the preferred embodiment, the supporting arm is pivotable about the rotational axis of the first gear.

The locking apparatus preferably is arranged to adopt its non-locking state under the influence of gravity. This may be achieved by positioning the locking member and the pivot axis of said locking member below the pinion gear. In preferred embodiments, the supporting arm has a counterweight portion and the supporting arm is configured to have a centre of gravity positioned such that the mass of the counterweight portion tends to cause a moment under gravity about the pivot axis of the supporting arm that has an opposite sense to the moment caused by the mass of the locking member under gravity

The first gear is preferably located below and aft of the pinion gear. The locking member is preferably located below and forwardly of the first gear.

In preferred embodiments, either the first gear or the pinion gear is directly or indirectly coupled to the output shaft of a rotary actuator. In embodiments of the invention, the supporting arm is arranged about the output shaft of a rotary actuator and is pivotable about the rotational axis of said output shaft. Preferably, the supporting arm is arranged about the output shaft of the rotary actuator by means of a bearing. Further preferably, the bearing is supported by a rotary actuator assembly, optionally by a bracket coupled to the rotary actuator assembly.

Preferably, the locking apparatus comprises resilient biasing means to maintain the locking member in an orientation in which the teeth of said locking member are engageable with the teeth of the pinion gear when the locking member is moved to its intermediate state. Further preferably, the resilient biasing means maintains the locking member in an orientation in which the teeth of said locking member are not engageable with the teeth of the first gear when the locking member is in the intermediate state. Said resilient biasing means preferably comprise a spring loaded detent and, optionally, a back stop to restrict the rotation of the locking member caused by the rotational force imparted on the locking member by the spring loaded detent. The rotation of the locking member caused by the rotational force imparted on the locking member by the spring loaded detent may be restricted to about one tooth pitch by the back stop. In embodiments of the invention, the biasing force of said resilient biasing means may be overcome in the event of said threshold force and/or said rotational force exerted on the locking member by the pinion gear.

In typical embodiments, the seat is reclinable, said relative linear movement of the carriage and base corresponding to the seat being operated between reclined and non-reclined states. Alternatively, or in addition, the seat is movable forward and rearwards, said relative linear movement of the carriage and base corresponding to the seat being moved forward and rearward.

Other preferred features are recited in the dependent claims.

Further advantageous aspects of the invention will become apparent to those ordinarily skilled in the art upon review of the following description of a specific embodiment and with reference to the accompanying drawings.

### Brief Description of the Drawings

An embodiment of the present invention will now be described, by way of example, with reference to the accompanying drawings, in which:
FIG 1 is a sectioned side view of a reclinable seat including a locking apparatus embodying the invention;
FIG 2 is a sectioned side view of the locking apparatus of FIG 1 in a non-locking state;
FIG 3 is a sectioned side view of the locking apparatus of FIG 1 in a non-locking state;
FIG 4 is a sectioned side view of the locking apparatus of FIG 1 in an intermediate state; and
FIG 5 is a sectioned side view of the locking apparatus of FIG 1 in a locking state.

### Description of Preferred Embodiments

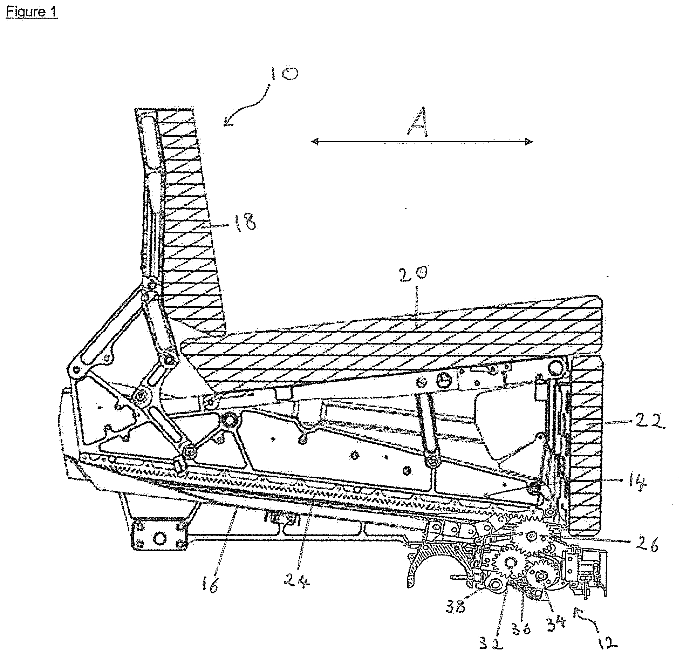

Referring to Figure 1, there is shown, generally indicated as 10, a vehicle seat including a locking apparatus 12 embodying the invention. The seat 10 is reclinable between a non-reclined state and a reclined state. The invention is particularly suitable for use with aircraft seats and so the illustrated seat 10 is an aircraft seat. Typically, in the reclined state, the seat 10 may serve as a bed and, to this end, may provide a substantially horizontal sleeping surface. The seat 10 may adopt a plurality of semi-reclined states between the non-reclined state and the (fully) reclined state.

The vehicle seat 10 of the invention includes a carriage 14 that is movable with respect to a base 16. The base 16 is fixed to the floor of the aircraft (or other vehicle) by any suitable fixing means, e.g. bolts. The seat 10 typically comprises a seat back 18, a seat pan 20 and a leg rest 22 which are all carried by the carriage 14. The carriage 14 is movable substantially linearly, forwards and rearwards, with respect to the base 16, as indicated by arrow A in Figure 1. Normally, this linear movement is substantially in the fore-and-aft direction of the vehicle, which in turn normally corresponds to the direction in which a seated passenger faces. A mechanism for facilitating relative movement between the carriage 14 and the base 16 is provided and preferably comprises a rack 24 and pinion, or gear 26, assembly. In the illustrated embodiment, the pinion gear 26 is provided on, and its rotational axis is fixed with respect to, the base 16, and the rack 24 is provided on the carriage 14. However, in alternative embodiments, the pinion gear 26 may provided on the carriage 14 and the rack 24 may be provided on the base 16. In either case, relative movement can be imparted between the carriage 14 and base 16 by inter-engagement of the respective teeth of the rack 24 and pinion gear 26. Also in either arrangement, it is preferred to locate the pinion gear 26 below the rack 24 (as illustrated), although it is possible to locate the pinion gear 26 above the rack 24. Preferably, the pinion gear 26 is located at the foremost end of the base 16, and therefore adjacent the foremost end of the carriage 14 when the seat 10 adopts its TTL (taxi, take-off or landing) position. Typically, movement of the carriage 14 relative to the base 16 is powered in which case the pinion gear 26 is coupled (directly or indirectly) to the drive shaft of an actuator, preferably a rotary actuator, e.g. a motor (not shown), such that rotation of the drive shaft causes rotation of the pinion gear 26 which in turn causes linear movement of the carriage 14 via the rack 24.

In alternative embodiments, the seat 10 need not necessarily be reclinable, in which case the carriage, base, rack, gear and, if required motor, may all be configured to facilitate fore-and-aft movement of the seat 10.

In normal, e.g. non-crash, situations, the resistive torque of the rotary actuator is sufficient to maintain the relative position of the carriage 14 and base 16. However, depending on the mass of the carriage 14 (or the combined mass of the carriage 14 and a passenger) it is possible, especially in the event of a crash, that the inertia of the carriage 14 might overcome the resistive torque of the rotary actuator. Should this occur the carriage 14 would not be prevented from moving and the seat 10 could be deemed to fail safety requirements.

The locking apparatus 12 is provided to selectively lock the position of the carriage 14 with respect to the base 16. As is described in more detail below, the locking apparatus 12 is configured to move from a non-locking state to an intermediate state and subsequently to a locking state in response to being subjected to a force that exceeds a threshold value. More particularly, the locking apparatus 12 is configured such that its inertia maintains it in the non-locking state, or at least out of the intermediate state, until a threshold-exceeding force is experienced whereupon the locking apparatus 12 is caused to adopt the intermediate state. The locking apparatus 12 may therefore be described as an inertia locking apparatus. In typical embodiments, the force required to cause the locking apparatus 12 to adopt the intermediate state and subsequently locking state is created by deceleration of the vehicle exceeding a threshold value. In the typical case where the seat 10 is facing forward in the direction of travel, i.e. in a forward longitudinal direction, the required deceleration is longitudinal and in the direction of travel. Hence, the locking apparatus 12 removes sensitivity to the carriage mass. More generally, the inertia of the locking apparatus 12 is such that it is responsive to forces of acceleration (where deceleration is negative acceleration), in particular linear acceleration, to maintain a non-locking state until a threshold level of acceleration is experienced whereupon it moves into the intermediate state, and wherein the activating forces are caused by acceleration or deceleration of the seat 10, and more particularly, of the vehicle.

The locking apparatus 12 comprises a first gear 32 rotatable about an axis that may be fixed with respect to the base 16. In the preferred embodiment, the first gear 32 is connected (directly or indirectly) to the output shaft of the rotary actuator and so is driven, typically directly driven, by the rotary actuator, although one or more other intermediate gears may alternatively be provided. The rotational axis of the first gear 32 corresponds with the rotational axis of the output shaft of the rotary actuator, although it may alternatively be parallel with the rotational axis of the actuator when one or more intermediate gears are provided. The first gear 32 is intermeshed with the pinion gear 26 such that rotation of the first gear 32 causes rotation of the pinion gear 26 but in the opposite sense. As used herein, the term "intermesh" is synonymous with "inter-engage" and refers to the reversible meshing of the teeth of respective gears.

The locking apparatus 12 further comprises a locking member 34 rotatable about an axis that is parallel with the rotational axis of the pinion gear 26, first gear 32 for rotation between intermediate and locking states, as will be described below in more detail. The respective rotational axes of the gears 26, 32, 34 are parallel with one another and run substantially perpendicularly to the direction A, and usually perpendicular to the direction of movement of the vehicle. The locking member 34, in the present embodiment, is a partially toothed gear or gear segment, that is, the locking member 34 may have one or more teeth located around part of the circumferential edge of the locking member 34. The locking member 34 may have a plurality of teeth around one or more portions of the circumferential edge of the locking member 34, wherein at least some of the teeth are positioned and orientated to be engageable with the teeth of the pinion gear 26. In preferred embodiments, the teeth of the locking member 34 are contiguously located around one portion of the circumferential edge of the locking member 34, said portion consisting of about 25% to about 75% of the circumference of the locking member 34. In the non-locking state, the locking member 34 is not in contact with, i.e. does not intermesh with, the pinion gear 26 and the first gear 32. Therefore, in the non-locking state, the locking member 34 cannot interfere with the normal operation (rotation) of the pinion gear 26 and the first gear 32 and the normal forward/aft and reclining movement of the seat 10.

In certain embodiments, the pinion gear 26 may be driven directly (or indirectly via one or more intermediate gears) by the rotary actuator, in which case rotation is imparted to the first gear 32 by the pinion gear 26. In either case, the positions of the respective rotational axis of the pinion gear 26 and the first gear 32 are static with respect to the base 16. The position of the locking member 34, and therefore its rotational axis, is variable and may be maintained by a supporting arm 36, which is free to rotate or pivot about the rotational axis of the first gear 32 such that the locking member 34 is moveable between its non-locking and intermediate states.

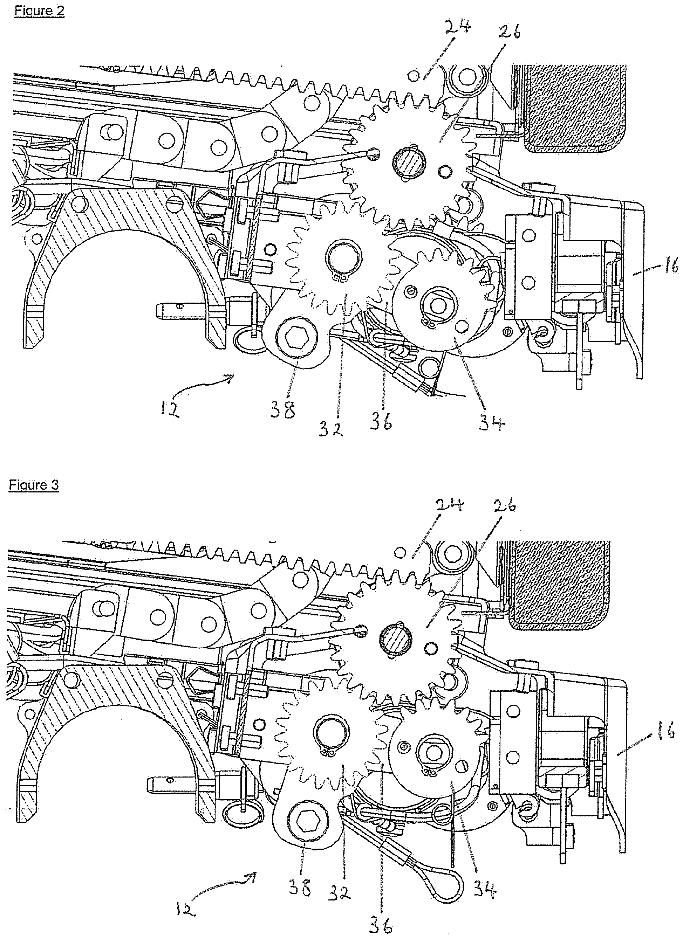

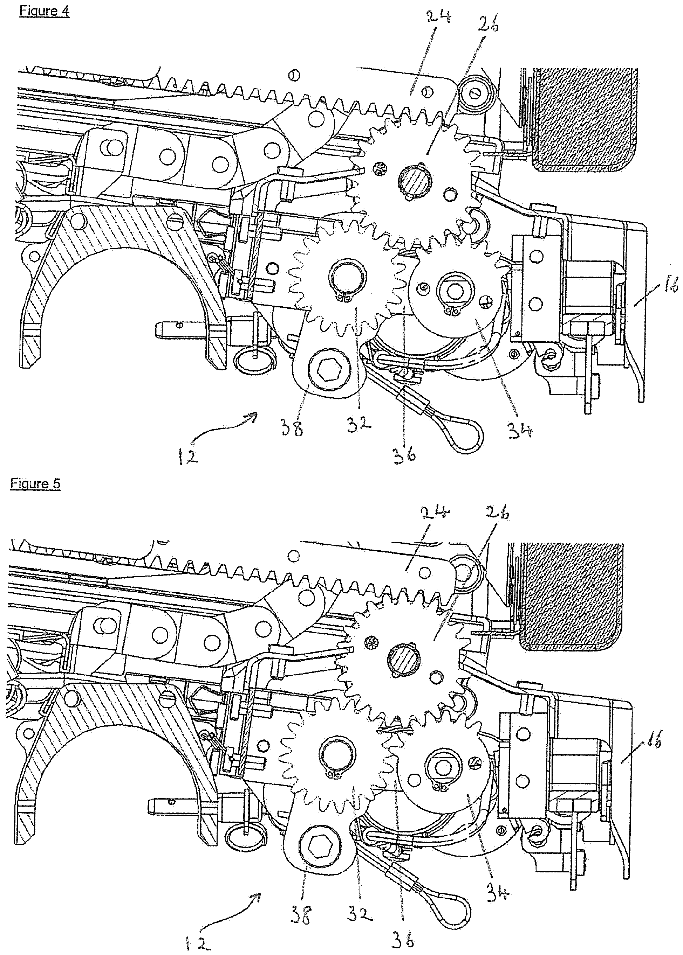

The locking member 34 may be coupled to the first gear 32 by the supporting arm 36. The supporting arm 36 is configured to allow the locking member 34 to pivot about the rotational axis of the first gear 32. To this end, the supporting arm 36 is pivotable about the rotational axis of the first gear 32, to allow movement of the locking member between its non-locking and intermediate states, and the locking member 34 may be rotatably coupled to the supporting arm 36, to allow movement of the locking member 34 between its intermediate and locking states. As is described in more detail below, the locking member 34 may be pivotable about the rotational axis of the first gear 32 at least in response to being subjected to forces caused by deceleration of the vehicle. The locking member 34 is pivotable between a non-locking state (Figures 2-3) and an intermediate state (Figure 4) in which the locking member 34 intermeshes with the pinion gear 26. The locking member 34 is subsequently rotatable between its intermediate state (Figure 4) and its locking state (Figure 5) during rotation of the pinion gear 26. The locking state of the locking member 34 corresponds to the locking state of the locking apparatus 12.

The supporting arm 36 may, for example, comprise a single plate or bracket located on one side of the gears 32, 34, or may comprise two spaced apart plates or brackets, one located on either side of the gears 32, 34, or may comprise any other suitable component or assembly of components. In the embodiment of the invention, the supporting arm 36 may be arranged about the output shaft of a rotary actuator and is pivotable about the rotational axis of said output shaft which corresponds to the rotational axis of the first gear 32. Further, the supporting arm 36 may be arranged about the output shaft of the rotary actuator by means of a bearing. The bearing may be supported by the rotary actuator assembly, for example by a bracket coupled to the rotary actuator assembly, and thus the actuator output shaft is free to rotate with substantially no contact between the supporting arm 36 and the output shaft.

Advantageously, the supporting arm 36 has a counterweight portion 38, and the supporting arm 36 is configured to have a centre of gravity positioned such that the mass of the counterweight portion 38 tends to cause a moment under gravity about the pivot axis of the supporting arm 36 that has an opposite sense to the moment caused by the mass of the locking member 34 under gravity. The weight of the supporting arm 36 may therefore be said to counterbalance the weight of the locking member 34 about the rotational axis of the first gear 32. This facilitates maintaining the locking member 34 in a preferred position when in the non-locking state and also helps move the locking member 34 to its intermediate state, into engagement with the pinion gear 26, in the event of deceleration as is described in more detail below. The supporting arm 36 has a counterweight portion 38 extending in a generally opposite direction with respect to the first gear 32 axis relative to the portion of the supporting arm 36 that carries the locking member 34 and, as such, extends rearwardly from the rotational axis of the first gear 32 in the illustrated embodiment.

In the preferred embodiment, the first gear 32 is located below and rearwardly (that is, aft) of the pinion gear 26. In this embodiment, the rearward direction corresponds with the direction in which the carriage 14 moves when the seat 10 is moved from its reclined or a semi-reclined state towards the non-reclined state, the forward direction being the direction in which the carriage 14 moves when the seat 10 is moved from its non-reclined state to the reclined state or a semi-reclined state. The forward direction corresponds with the direction of forward movement of the vehicle and so it is assumed in this example that the seat 10 faces in said forward direction. Preferably, the locking member 34 is located below and forwardly of the first gear 32. Conveniently, this is facilitated by the action of the counterweight portion 38. The supporting arm 36 is preferably also substantially below the axis of the first gear 32. In alternative embodiments, the first gear 32 may be located above and rearwardly of the pinion gear 26, the locking member 34 preferably being located above and forwardly of the first gear 32.

The locking apparatus 12 may comprise resilient biasing means (not shown) to maintain the locking member 34 in an orientation in which the teeth of the locking member 34 are engageable with the teeth of the pinion gear 26 when the locking member 34 is moved to its intermediate state. Advantageously, the resilient biasing means may also maintain the locking member 34 in an orientation in which the teeth of said locking member 34 are not engageable with the teeth of the first gear 32 when the locking member 34 is in its intermediate state. The resilient biasing means typically comprises a spring loaded detent and a back stop. If sufficient torque is applied to the locking member 34 by the threshold force and/or the rotational force exerted on the locking member 34 by the pinion gear 26, the detent is overcome and the locking member 34 will rotate between its intermediate state and its locking state. The back stop can restrict the rotation of the locking member 34 caused by the rotational force imparted on the locking member 34 by the spring loaded detent. Typically, the rotation is restricted by the back stop to approximately one tooth pitch. This is to ensure that the teeth of the locking member 34 are always presented in a position where meshing with the pinion gear 26 is possible. The rotation of the locking member 34 in the opposite direction, that is, the direction of the rotation imparted by the pinion gear 26, is less restricted so that the locking member 34 can be rotated sufficiently to allow the teeth of the locking member 34 to intermesh with the teeth of the pinion gear 26 and the first gear 32 and the locking member 34 rotates from its intermediate state to its locking state. The locking member 34 may return to its unlocked state under the influence of gravity when the crash load levels decrease to less than the threshold value.

Referring in particular to Figures 2-3, the locking apparatus 12 is shown in its non-locking state in which the locking member 34 is not engaged with either of the pinion gear 26 or the first gear 32. The locking apparatus 12 is configured to adopt the non-locking state under the influence of gravity, and when subjected to forces resulting from acceleration or deceleration of the vehicle during normal use, e.g. during take off, taxiing, landing or normal flight of an aircraft. In these circumstances, the locking member 34 is held in position by the weight of the locking member 34 (counterbalanced by the weight of the supporting arm 36, including any counterweight portion 38, in the preferred embodiment) acting forwardly of the rotational/pivotal axis of the supporting arm 36. The exact position of the locking member 34 in the non-locking state may vary depending on the activity of the vehicle.

When the vehicle seat 10, and therefore the locking apparatus 12, is subjected to a threshold-exceeding force in the forward direction, especially a force caused by deceleration of the vehicle exceeding a threshold value (as may occur during an accident or emergency situation), the combined mass of the locking member 34 and the supporting arm 36 (and any counterweight portion 38) generate a torque, or moment, about the rotational axis of the supporting arm 36 that counteracts and overcomes the weight, or inertia, of the locking member 34, causing the locking member 34 to move towards its intermediate state, wherein it can engage with the pinion gear 26 and, more particularly, intermeshes with the pinion gear 26 provided the respective teeth of the gears 34, 26 are positioned relative to one another to allow intermeshing. One purpose of the counterweight portion 38 is to prevent reduction in the turning moment as the height of the locking member 34 approaches that of the axis of the first gear 32. When the locking member 34 is intermeshed with the pinion gear 26, the pinion gear 26 may be prevented from rotating further. The arrangement is such that the deceleration required to move the locking member 34 is much less than that required to overcome the resistance of the rotary actuator and cause the gears 26, 32 to rotate due to movement of the carriage 14. Hence, the intermediate state is adopted before the carriage 14 can move. This may, for example, be arranged by appropriate selection of the combined mass of the locking member 34 and supporting arm 36 and, advantageously, the shape and configuration of the supporting arm 36.

Figures 2-3 show the locking apparatus 12 in its non-locking state in which the locking member 34 is disengaged from the pinion gear 26, and also from the first gear 32. The exact position of the locking member 34 in the non-locking state is variable and depends on the equilibrium position adopted by the supporting arm 36 and the locking member 34 when acted on by gravity alone together with the effects of any forces that may be present due to acceleration or deceleration of the vehicle. In Figure 2, zero acceleration of the vehicle is assumed in which case the locking member 34 adopts its equilibrium position under the influence of gravity alone. Figures 3 to 4 show, progressively, the locking member 34 moving towards and into engagement with the pinion gear 26 in response to deceleration of the vehicle. Figure 5 shows the locking member 34 inter-engaging with the gears 26 and 32 in response to deceleration of the vehicle and the forward movement of the rack 24, and consequent rotation of the pinion gear 26.

In Figure 3, the teeth of the locking member 34 can still rotate past those of the pinion gear 26 and so the intermediate state has not been reached. In this example, the state shown in Figure 3 is assumed to occur between the non-locking and intermediate states, although it could also occur if the experienced deceleration was insufficient to cause the locking member 34 to reach its intermediate state (in which case the locking member 34 would move away from the pinion gear 26 when the deceleration decreased). Upon initial engagement of the gears 26, 34, the tips of their respective teeth may be aligned such that they clash with one another to prevent intermeshing of the gears 26, 34. If the crash load does not rise to a point where the resistance of the actuator is overcome, the system is still safe. However, if the level of deceleration continues to increase to the point where the rotary actuator resistance is overcome by the forces acting on the carriage 14, the carriage 14 will move causing the pinion gear 26 to rotate and allow the teeth of the gears 26, 34 to intermesh, causing the intermediate state to be adopted (Figure 4).

In Figure 4, the teeth of the locking member 34 have entered the spaces between the teeth of the pinion gear 26 and hence, the intermediate state has been reached and the further rotation of the pinion gear 26 cannot take place without rotation of the locking member 34. The counter rotational effect of the resilient biasing means on the locking member 34 and/or the presence of a back stop (not shown) may resist or even prevent further rotation of the locking gear 34 due to the rotation of the pinion gear 26. The back stop may be the same back stop as is comprised in the resilient biasing means, or it may be a different back stop. Following intermeshing with the pinion gear 26, the locking member 34 may be further rotated, overcoming the biasing effect of the resilient biasing means, until the teeth of the locking member 34 also intermesh with the teeth of the first gear 32 wherein the locking member 34 adopts its locking position (Figure 5). Since the gears 26 and 32 rotate in opposite senses, simultaneous intermeshing of the locking member 34 with both of gears 26 and 32 will prevent further rotation of all three gears. The intermeshing of the pinion gear 26 and the locking member 34, and optionally the first gear 32, may occur when the force exerted on the locking apparatus 12 in the forward direction exceeds a threshold value. In the described examples, it is assumed that this occurs when the vehicle decelerates at a level above a threshold value.

Depending on the load exerted by the rotary actuator, the interaction between the intermeshed gears 26, 32, 34, may maintain them in their intermeshed state, i.e. maintain the locking state. Further, the interaction of the intermeshed gears 26, 32 and 34 tends to maintain the locked state due to the directions of rotation/moment about each gear axis, which tends to increase the meshing force on the gears 26, 33 and 34. If the direction of movement of the carriage 14 or the motor rotation were reversed, the gears would tend to disengage.

In alternative embodiments (not illustrated), any suitable actuator, e.g. a linear actuator, may be used to recline the seat 10 rather than a rotary actuator, in which case none of the gears of the locking apparatus 12, or coupled to the gears of the locking apparatus 12, are driven directly or in directly by rotary drive means. For example, the carriage 14 may be driven by a linear actuator, in which case rotational movement would be imparted to the gears via the rack. Alternatively still, the seat recline mechanism may be manually driven, e.g. by a passenger, rather than by a powered actuator.

In alternative embodiments (not illustrated), the locking apparatus 12 may be provided on the moveable carriage 14 rather than the base 16, in which case the position of the rotational axis of the first gear 32, and the pinion gear 26 (if present), would be fixed with respect to the carriage 14. In such embodiments the rack 24 is typically provided on the base 16.

In alternative embodiments, the pinion gear 26 may be omitted and the gears 32, 34 may each interact directly with the rack 24. The operation of the locking apparatus 12 in such embodiments is substantially the same as that described above, although, in the locked state, the locking member 34 engages with the rack 24 and the first (optionally driven) gear 32 to lock the carriage 14 in position.

More generally, locking apparatus embodying the invention may comprise a first and a second component, each having a respective set of inter-engagable teeth, one component being provided on the carriage, the other on the base, such that the respective sets of teeth inter-engage, and such that, during movement of the carriage with respect to the base, one of said first and second components imparts movement to the other via the respective teeth, and wherein a locking member is movable between a non-locking state, in which said locking member is disengaged from the pinion gear and the first gear, and a locking state, in which said locking member inter-engages with the pinion gear, and optionally, the first gear, to prevent rotation of the pinion and first gears. The component with which the locking member may engage during use is typically also a rotatable gear, while the other component may be a rotatable gear, a toothed rack or other toothed component.

Alternative embodiments of the locking apparatus 12 may use more complex gear trains than those described herein, e.g. more than one driven gear and/or more than one locking member, or a gear train in place of any one or more of the aforementioned single gears.

The invention is not limited to the embodiment described herein but can be amended or modified without departing from the scope of the present invention.

## Claims

1. A vehicle seat (10) having a carriage (14) that is linearly movable with respect to a base (16), and a locking apparatus (12) comprising first and second components (26,32), each having a respective set of teeth that inter-engage such that, during movement of the carriage (14) with respect to the base (16), one of said first and second toothed components imparts movement to the other via the respective teeth, the locking apparatus (12) further comprising a locking member (34) having a set of teeth formed thereon for selectively inter-engaging the teeth of the first and second components, the locking member (34) being movable between a non-locking state, wherein the teeth of the locking member (34) do not engage the teeth of either of said first and second components (26,32), an intermediate state, wherein the teeth of the locking member (34) engage the teeth of the first component (26), and a locking state, wherein the teeth of the locking member engage (34) with the teeth of both of said first and second components (26,32) to prevent relative movement between the first and second components, the locking member (34) being moved between its intermediate and locking states by virtue of movement of the first component (26) with respect to the second component (32), wherein said carriage (14) is linearly movable with respect to said base (16) along a first axis corresponding to a fore-and-aft direction of a seated passenger, said locking member (34) being responsive to a force in a first direction along said first axis above a threshold level to move from its non-locking state into its intermediate state, subsequent displacement of said carriage (14) with respect to the base (16) due to said force causing movement of the locking member (34) from its intermediate state to its locking state,
**characterized in that** in the intermediate state the teeth of the locking member engage only the teeth of the first component.

2. A vehicle seat as claimed in claim 1, wherein said force is created in use by deceleration of said vehicle seat or wherein said force is created in use by acceleration of said vehicle seat.

3. A vehicle seat as claimed in any preceding claim, wherein said locking apparatus (12) is configured such that said locking member (34) adopts its non-locking state under the influence of gravity.

4. A vehicle seat as claimed in any preceding claim, wherein said locking member (34) is pivotably movable between its non-locking and intermediate states.

5. A vehicle seat as claimed in any preceding claim, wherein said locking member (34) comprises is a partially toothed gear or a segment of a gear.

6. A vehicle seat as claimed in any preceding claim, wherein said carriage (14) and said base (16) are coupled together by a rack (24) and pinion gear (26), said first toothed component comprises said rack (24) and said second toothed component comprises said pinion gear (26) or wherein said first toothed component comprises said pinion gear (26), and said second toothed component comprises a toothed first gear (32) intermeshed with said pinion gear (26).

7. A vehicle seat as claimed in claim 6, wherein the locking apparatus comprises a first gear (32) coupled to the pinion gear (26) such that the first gear and pinion gear rotate, in use, in opposite senses, and wherein the locking member (34) is disengaged from the first gear and the pinion gear when in its non-locking state, the locking member (34) being engaged with the pinion gear (26) but disengaged from the first gear (32) when in its intermediate state, and wherein the locking member (34) intermeshes with both the pinion gear (26) and the first gear (32), to prevent rotation of the pinion gear, when in its locking state.

8. A vehicle seat as claimed in claim 6 or claim 7, wherein said first gear (32) intermeshes with said pinion gear (26).

9. A vehicle seat as claimed in any of claims 6 to 8, further comprising a supporting arm (36), the locking member (34) being rotatably coupled to the supporting arm (36), and the supporting arm (36) being pivotable with respect to the locking apparatus to allow the locking member (34) to pivot between its non-locking state and its intermediate state and to rotate between its intermediate and locking states and, wherein the supporting arm (36) is pivotable about the rotational axis of the first gear (32).

10. A vehicle seat as claimed in claim 9, wherein the locking member (34) and the pivot axis of the locking member are positioned below the pinion gear (26), the locking member (34) being arranged to adopt its non-locking state under the influence of gravity.

11. A vehicle seat as claimed in claim 9 or claim 10, wherein the supporting arm (36) has a counterweight portion (38), and the supporting arm (36) is configured to have a centre of gravity positioned such that the mass of the counterweight portion (38) tends to cause a moment under gravity about the pivot axis of the supporting arm (36) that has an opposite sense to the moment caused by the mass of the locking member (34) under gravity.

12. A vehicle seat as claimed in any one of claims 6 to 11, wherein said carriage (14) is linearly movable with respect to said base (16) along a first axis corresponding to a fore-and-aft direction of a seated passenger, the first gear (32) being located below and aft of the pinion gear (26), the locking member (34) being located below and forwardly of the first gear (32).

13. A vehicle seat as claimed in any preceding claim, wherein resilient biasing means are arranged to maintain the locking member (34) in an orientation in which the teeth of said locking member (34) are engageable with the teeth of the pinion gear (26) when the locking member (34) is moved to its intermediate state.

## Patentansprüche

1. Fahrzeugsitz (10) mit einem Schlitten (14), der in Bezug auf eine Basis (16) linear bewegbar ist, und einer Sperrvorrichtung (12), umfassend eine erste und eine zweite Komponente (26, 32), die jeweils einen jeweiligen Satz Zähne aufweisen, die derart ineinandergreifen, dass während der Bewegung des Schlittens (14) in Bezug auf die Basis (16) eine von der ersten und der zweiten gezahnten Komponente über die jeweiligen Zähne Bewegung auf die andere überträgt, wobei die Sperrvorrichtung (12) weiter ein Sperrelement (34) mit einem daran gebildeten Satz Zähne zum selektiven Ineinandergreifen mit den Zähnen der ersten und der zweiten Komponente umfasst, wobei das Sperrelement (34) zwischen einem nicht sperrenden Zustand, in dem sich die Zähne des Sperrelements (34) nicht mit den Zähnen von entweder der ersten oder der zweiten Komponente (26, 32) im Eingriff befinden, einem mittleren Zustand, in dem sich die Zähne des Sperrelements (34) mit den Zähnen der ersten Komponente (26) im Eingriff befinden, und einem Sperrzustand, in dem sich die Zähne des Sperrelements (34) mit den Zähnen von sowohl der ersten als auch der zweiten Komponente (26, 32) im Eingriff befinden, um die Relativbewegung zwischen der ersten und der zweiten Komponente zu verhindern, bewegbar ist, wobei das Sperrelement (34) durch die Bewegung der ersten Komponente (26) in Bezug auf die zweite Komponente (32) zwischen seinem mittleren und seinem Sperrzustand bewegt wird, wobei
der Schlitten (14) in Bezug auf die Basis (16) entlang einer einer Richtung nach vorne und nach hinten eines sitzenden Fahrgasts entsprechenden ersten Achse linear bewegbar ist, wobei das Sperrelement (34) auf eine Kraft in einer ersten Richtung entlang der ersten Achse reagiert, die über einem Schwellenwert liegt, um sich aus seinem nicht verriegelnden Zustand in seinen mittleren Zustand zu bewegen, wobei die anschließende Verschiebung des Schlittens (14) in Bezug auf die Basis (16) infolge der Kraft die Bewegung des Sperrelements (34) aus seinem mittleren Zustand in seinen Sperrzustand bewirkt,
**dadurch gekennzeichnet, dass** sich in dem mittleren Zustand die Zähne des Sperrelements nur mit den Zähnen der ersten Komponente im Eingriff befinden.

2. Fahrzeugsitz nach Anspruch 1, wobei die Kraft in Gebrauch durch Verlangsamung des Fahrzeugsitzes erzeugt wird, oder wobei die Kraft in Gebrauch durch Beschleunigung des Fahrzeugsitzes erzeugt wird.

3. Fahrzeugsitz nach einem der vorangehenden Ansprüche, wobei die Sperrvorrichtung (12) derart konfiguriert ist, dass das Sperrelement (34) unter dem Einfluss der Schwerkraft seinen nicht sperrenden Zustand einnimmt.

4. Fahrzeugsitz nach einem der vorangehenden Ansprüche, wobei das Sperrelement (34) schwenkbar zwischen seinem nicht sperrenden und seinem mittleren Zustand bewegbar ist.

5. Fahrzeugsitz nach einem der vorangehenden Ansprüche, wobei das Sperrelement (34) ein teilweise gezahntes Rad oder ein Segment eines Zahnrads umfasst.

6. Fahrzeugsitz nach einem der vorangehenden Ansprüche, wobei der Schlitten (14) und die Basis (16) mit einer Zahnstange (24) und einem Ritzel (26) aneinander gekoppelt sind, die erste gezahnte Komponente die Zahnstange (24) umfasst und die zweite gezahnte Komponente das Ritzel (26) umfasst, oder wobei die erste gezahnte Komponente das Ritzel (26) umfasst und die zweite gezahnte Komponente ein erstes Zahnrad (32) umfasst, das mit dem Ritzel (26) verzahnt ist.

7. Fahrzeugsitz nach Anspruch 6, wobei die Sperrvorrichtung ein erstes Zahnrad (32) umfasst, das an das Ritzel (26) gekoppelt ist, sodass sich das erste Zahnrad und das Ritzel in Gebrauch in entgegengesetzten Richtungen drehen, und wobei das Sperrelement (34) von dem ersten Zahnrad und dem Ritzel getrennt ist, wenn es sich in seinem nicht sperrenden Zustand befindet, wobei sich das Sperrelement (34) mit dem Ritzel (26) im Eingriff befindet aber von dem ersten Zahnrad (32) getrennt ist, wenn es sich in seinem mittleren Zustand befindet, und wobei das Sperrelement (34) mit sowohl dem Ritzel (26) als auch dem ersten Zahnrad (32) verzahnt ist, um die Drehung des Ritzels zu verhindern, wenn es sich in seinem Sperrzustand befindet.

8. Fahrzeugsitz nach Anspruch 6 oder Anspruch 7, wobei das erste Zahnrad (32) mit dem Ritzel (26) verzahnt ist.

9. Fahrzeugsitz nach einem der Ansprüche 6 bis 8, weiter umfassend einen Stützarm (36), wobei das Sperrelement (34) drehbar an den Stützarm (36) gekoppelt ist und der Stützarm (36) in Bezug auf die Sperrvorrichtung schwenkbar ist, um es dem Sperrelement (34) zu ermöglichen, zwischen seinem nicht sperrenden Zustand und seinem mittleren Zustand zu schwenken und sich zwischen seinem mittleren Zustand und seinem Sperrzustand zu drehen, und wobei der Stützarm (36) um die Drehachse des ersten Zahnrads (32) schwenkbar ist.

10. Fahrzeugsitz nach Anspruch 9, wobei das Sperrelement (34) und die Schwenkachse des Sperrelements unter dem Ritzel (26) positioniert sind, wobei das Sperrelement (34) dazu angeordnet ist, seinen nicht sperrenden Zustand unter dem Einfluss der Schwerkraft einzunehmen.

11. Fahrzeugsitz nach Anspruch 9 oder Anspruch 10, wobei der Stützarm (36) einen Gegengewichtabschnitt (38) aufweist und der Stützarm (36) dazu konfiguriert ist, einen Schwerpunkt aufzuweisen, der derart positioniert ist, dass die Masse des Gegengewichtabschnitts (38) dazu neigt, ein Moment unter der Schwerkraft um die Schwenkachse des Stützarms (36) zu bewirken, das eine zu dem von der Masse des Sperrelements (34) unter der Schwerkraft bewirkten Moment entgegengesetzte Richtung aufweist.

12. Fahrzeugsitz nach einem der Ansprüche 6 bis 11, wobei der Schlitten (14) in Bezug auf die Basis (16) entlang einer einer Richtung nach vorne und hinten eines sitzenden Fahrgasts entsprechenden ersten Achse linear bewegbar ist, wobei sich das erste Zahnrad (32) unter und hinter dem Ritzel (26) befindet, wobei sich das Sperrelement (34) unter und vor dem ersten Zahnrad (32) befindet.

13. Fahrzeugsitz nach einem der vorangehenden Ansprüche, wobei elastische Vorspannmittel angeordnet sind, um das Sperrelement (34) in einer Orientierung zu halten, in der die Zähne des Sperrelements (34) mit den Zähnen des Ritzels (26) in Eingriff gelangen können, wenn das Sperrelement (34) in seinen mittleren Zustand bewegt wird.

## Revendications

1. Siège de véhicule (10) ayant un chariot (14) qui est mobile dans le sens linéaire par rapport à une base (16), et un appareil de verrouillage (12) comportant des premier et deuxième composants (26, 32), ayant chacun un ensemble respectif de dents qui se mettent mutuellement en prise de telle sorte que, lors du mouvement du chariot (14) par rapport à la base (16), l'un parmi lesdits premier et deuxième composants dentés communique un mouvement à l'autre par le biais des dents respectives, l'appareil de verrouillage (12) comportant par ailleurs un élément de verrouillage (34) ayant un ensemble de dents formées sur celui-ci servant à des fins de mise en prise sélectivement mutuelle des dents des premier et deuxième composants, l'élément de verrouillage (34) étant mobile entre un état de non-verrouillage, dans lequel les dents de l'élément de verrouillage (34) ne sont pas mises en prise avec les dents de l'un ou l'autre desdits premier et deuxième composants (26, 32), un état intermédiaire, dans lequel les dents de l'élément de verrouillage (34) sont mises en prise avec les dents du premier composant (26), et un état de verrouillage, dans lequel les dents de l'élément de verrouillage (34) sont mises en prise avec les dents à la fois desdits premier et deuxième composants (26, 32) pour empêcher tout mouvement relatif entre les premier et deuxième composants, l'élément de verrouillage (34) étant déplacé entre ses états intermédiaire et de verrouillage en raison du mouvement du premier composant (26) par rapport au deuxième composant (32), dans lequel ledit chariot (14) est mobile dans le sens linéaire par rapport à ladite base (16) le long d'un premier axe correspondant à une direction allant d'avant en arrière d'un passager assis, ledit élément de verrouillage (34) réagissant à une force dans une première direction le long dudit premier axe au-dessus d'un niveau de seuil à des fins de déplacement depuis son état de non-verrouillage jusqu'à son état intermédiaire, tout déplacement ultérieur dudit chariot (14) par rapport à la base (16) étant dû à ladite force causant le mouvement de l'élément de verrouillage (34) depuis son état intermédiaire jusqu'à son état de verrouillage, **caractérisé en ce que**, dans l'état intermédiaire, les dents de l'élément de verrouillage sont mises en prise uniquement avec les dents du premier composant.

2. Siège de véhicule selon la revendication 1, dans lequel ladite force est créée lors de l'utilisation par la décélération dudit siège de véhicule ou dans lequel ladite force est créée lors de l'utilisation par l'accélération dudit siège de véhicule.

3. Siège de véhicule selon l'une quelconque des revendications précédentes, dans lequel ledit appareil de verrouillage (12) est configuré de telle sorte que ledit élément de verrouillage (34) adopte son état de non-verrouillage sous l'influence de la gravité.

4. Siège de véhicule selon l'une quelconque des revendications précédentes, dans lequel ledit élément de verrouillage (34) est mobile de manière pivotante entre ses états de non-verrouillage et intermédiaire.

5. Siège de véhicule selon l'une quelconque des revendications précédentes, dans lequel ledit élément de verrouillage (34) comporte un engrenage partiellement denté ou un segment d'un engrenage.

6. Siège de véhicule selon l'une quelconque des revendications précédentes, dans lequel ledit chariot (14) et ladite base (16) sont accouplés ensemble par une crémaillère (24) et un engrenage à pignons (26), ledit premier composant denté comporte ladite crémaillère (24) et ledit deuxième composant denté comporte ledit engrenage à pignons (26) ou dans lequel ledit premier composant denté comporte ledit engrenage à pignons (26), et ledit deuxième composant denté comporte un premier engrenage denté (32) engrené avec ledit engrenage à pignons (26).

7. Siège de véhicule selon la revendication 6, dans lequel l'appareil de verrouillage comporte un premier engrenage (32) accouplé à l'engrenage à pignons (26) de telle sorte que le premier engrenage et l'engrenage à pignons tournent, lors de l'utilisation, dans des sens opposés, et dans lequel l'élément de verrouillage (34) est mis hors de prise par rapport au premier engrenage et à l'engrenage à pignons quand il est dans son état de non-verrouillage, l'élément de verrouillage (34) étant mis en prise avec l'engrenage à pignons (26) mais hors de prise par rapport au premier engrenage (32) quand il est dans son état intermédiaire, et dans lequel l'élément de verrouillage (34) s'engrène avec à la fois l'engrenage à pignons (26) et le premier engrenage (32), pour empêcher toute rotation de l'engrenage à pignons, quand il est dans son état de verrouillage.

8. Siège de véhicule selon la revendication 6 ou la revendication 7, dans lequel ledit premier engrenage (32) s'engrène avec ledit engrenage à pignons (26).

9. Siège de véhicule selon l'une quelconque des revendications 6 à 8, comportant par ailleurs un bras de support (36), l'élément de verrouillage (34) étant accouplé de manière rotative au bras de support (36), et le bras de support (36) étant en mesure de pivoter par rapport à l'appareil de verrouillage pour permettre à l'élément de verrouillage (34) de pivoter entre son état de non-verrouillage et son état intermédiaire et de tourner entre ses états intermédiaire et de verrouillage et, dans lequel le bras de support (36) est en mesure de pivoter autour de l'axe de rotation du premier engrenage (32).

10. Siège de véhicule selon la revendication 9, dans lequel l'élément de verrouillage (34) et l'axe de pivot de l'élément de verrouillage sont positionnés sous l'engrenage à pignons (26), l'élément de verrouillage (34) étant agencé pour adopter son état de non-verrouillage sous l'influence de la gravité.

11. Siège de véhicule selon la revendication 9 ou la revendication 10, dans lequel le bras de support (36) a une partie à contrepoids (38), et le bras de support (36) est configuré pour avoir un centre de gravité positionné de telle sorte que la masse de la partie à contrepoids (38) tend à causer un moment sous l'effet de la gravité autour de l'axe de pivot du bras de support (36) qui a un sens opposé au moment causé par la masse de l'élément de verrouillage (34) sous l'effet de la gravité.

12. Siège de véhicule selon l'une quelconque des revendications 6 à 11, dans lequel ledit chariot (14) est mobile dans le sens linéaire par rapport à ladite base (16) le long d'un premier axe correspondant à une direction allant d'avant en arrière d'un passager assis, le premier engrenage (32) étant situé sous et à l'arrière de l'engrenage à pignons (26), l'élément de verrouillage (34) étant situé sous et vers l'avant du premier engrenage (32).

13. Siège de véhicule selon l'une quelconque des revendications précédentes, dans lequel des moyens de sollicitation élastiques sont agencés pour maintenir l'élément de verrouillage (34) selon une orientation dans laquelle les dents dudit élément de verrouillage (34) sont en mesure de se mettre en prise avec les dents de l'engrenage à pignons (26) quand l'élément de verrouillage (34) est déplacé jusqu'à son état intermédiaire.
